# FASCICULE DE BREVET EUROPEEN

(11) **EP 2 509 808 B1**
(45) Date de publication et mention de la délivrance du brevet: **19.08.2015**
(21) Numéro de dépôt: 10787763.1
(22) Date de dépôt: 07.12.2010
(51) Int. Cl.: B60C 15/06

(54) **BOURRELET DE PNEUMATIQUE POUR VEHICULE LOURD DE TYPE GENIE CIVIL**
REIFENWULST FÜR EIN SCHWERES BAUFAHRZEUG
TIRE BEAD FOR HEAVY CIVIL ENGINEERING VEHICLE

(30) Priorité: 09.12.2009 FR 0958783
(43) Date de publication de la demande: 17.10.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: BONDU, Lucien, F-63800 La Roche Noire (FR)
(74) Mandataire: Le Cam, Stéphane Georges Elie
(86) Numéro de dépôt international: PCT/EP2010/069079
(87) Numéro de publication internationale: WO 2011/070020

(56) Documents cités:
- US-A- 4 716 950
- US-A- 5 056 575

## Description

La présente invention concerne un pneumatique radial destiné à équiper un véhicule lourd de type génie civil.

Bien que non limitée à ce type d'application, l'invention sera plus particulièrement décrite en référence à un pneumatique radial destiné à être monté sur un dumper, véhicule de transport de matériaux extraits de carrières ou de mines de surface. Le diamètre nominal de la jante d'un tel pneumatique, au sens de la norme European Tyre and Rim Technical Organisation ou ETRTO, est égal au minimum à 25".

Dans ce qui suit, on désigne par:
- « Plan méridien »: un plan contenant l'axe de rotation du pneumatique.
- « Plan équatorial »: le plan passant par le milieu de la surface de roulement du pneumatique et perpendiculaire à l'axe de rotation du pneumatique.
- « Direction radiale »: une direction perpendiculaire à l'axe de rotation du pneumatique.
- « Direction axiale »: une direction parallèle à l'axe de rotation du pneumatique.
- « Direction circonférentielle »: une direction perpendiculaire à un plan méridien.
- « Distance radiale »: une distance mesurée perpendiculairement à l'axe de rotation du pneumatique et à partir de l'axe de rotation du pneumatique.
- « Distance axiale »: une distance mesurée parallèlement à l'axe de rotation du pneumatique et à partir du plan équatorial.
- « Radialement » : selon une direction radiale.
- « Axialement » : selon une direction axiale.
- « Radialement intérieur, respectivement radialement extérieur »: dont la distance radiale est inférieure, respectivement supérieure.
- « Axialement intérieur, respectivement axialement extérieur»: dont la distance axiale est inférieure, respectivement supérieure.

Un pneumatique comprend deux bourrelets, assurant la liaison mécanique entre le pneumatique et la jante sur laquelle il est monté, les bourrelets étant réunis respectivement par l'intermédiaire de deux flancs à une bande de roulement, destinée à venir en contact avec le sol par l'intermédiaire d'une surface de roulement.

Un pneumatique radial comprend plus particulièrement une armature de renforcement, comprenant une armature de sommet, radialement intérieure à la bande de roulement, et une armature de carcasse, radialement intérieure à l'armature de sommet.

L'armature de carcasse d'un pneumatique radial pour véhicule lourd de type génie civil comprend habituellement au moins une couche d'armature de carcasse constituée d'éléments de renforcement métalliques enrobés d'un matériau polymérique d'enrobage. Les éléments de renforcement métalliques sont sensiblement parallèles entre eux et font, avec la direction circonférentielle, un angle compris entre 85° et 95°. La couche d'armature de carcasse comprend une partie principale, reliant les deux bourrelets entre eux et s'enroulant, dans chaque bourrelet, autour d'un noyau tringle. Le noyau tringle comprend un élément de renforcement circonférentiel le plus souvent métallique entouré d'au moins un matériau, de manière non exhaustive, polymérique ou textile. L'enroulement de la couche d'armature de carcasse autour du noyau tringle va de l'intérieur vers l'extérieur du pneumatique pour former un retournement d'armature de carcasse, comprenant une extrémité. Le retournement d'armature de carcasse, dans chaque bourrelet, permet l'ancrage de la couche d'armature de carcasse au noyau tringle du bourrelet.

Chaque bourrelet comprend un élément de remplissage prolongeant radialement vers l'extérieur le noyau tringle. L'élément de remplissage a, dans tout plan méridien, une section sensiblement triangulaire et est constitué d'au moins un matériau polymérique de remplissage. L'élément de remplissage est généralement constitué d'un empilage dans le sens radial d'au moins deux matériaux polymériques de remplissage en contact suivant une surface de contact coupant tout plan méridien selon une trace méridienne. L'élément de remplissage sépare axialement la partie principale d'armature de carcasse et le retournement d'armature de carcasse.

Le document US 4716950 décrit un renfort métallique entre les deux matériaux de remplissage et le document US 5056575 décrit un élément souple intermédiaire.

Un matériau polymérique, après cuisson, est caractérisé mécaniquement par des caractéristiques de contrainte-déformation en traction, déterminées par des essais de traction. Ces essais de traction sont effectués par l'homme du métier, sur une éprouvette, selon une méthode connue, par exemple conformément à la norme internationale ISO 37, et dans les conditions normales de température (23 + ou-2°C) et d'hygrométrie (50 + ou -5% d'humidité relative), définies par la norme internationale ISO 471. On appelle module d'élasticité à 10% d'allongement d'un mélange polymérique, exprimé en méga pascals (MPa), la contrainte de traction mesurée pour un allongement de 10% de l'éprouvette.

Un matériau polymérique, après cuisson, est également caractérisé mécaniquement par sa dureté. La dureté est notamment définie par la dureté Shore A déterminée conformément à la norme ASTM D 2240-86.

Au cours du roulage du véhicule, le pneumatique, monté sur sa jante, gonflé et écrasé sous la charge du véhicule, est soumis à des cycles de flexion, en particulier au niveau de ses bourrelets et de ses flancs.

Les cycles de flexion entraînent en particulier des contraintes et déformations principalement de cisaillement et de compression, dans les matériaux polymériques de remplissage, en raison de la flexion du bourrelet sur le rebord de jante.

En particulier, au niveau de la surface de contact entre deux matériaux polymériques de remplissage, les cycles de flexion initient des fissures qui se propagent dans le matériau polymérique de remplissage le plus radialement extérieur, et sont susceptibles d'entraîner, dans la durée, une dégradation du pneumatique nécessitant son remplacement.

Selon les inventeurs, l'initiation des fissures résulte du gradient de rigidités entre le matériau polymérique de remplissage le plus radialement intérieur et en contact avec le noyau tringle, et le matériau polymérique de remplissage qui lui est radialement extérieur et adjacent le long d'une surface de contact. Les défauts de cohésion entre les deux matériaux polymériques de remplissage, le long de leur surface de contact, est un facteur déclenchant la fissuration.

La vitesse de propagation des fissures dépend d'une part de l'amplitude et de la fréquence des cycles de contraintes et de déformations, d'autre part des rigidités respectives des matériaux polymériques de remplissage. A titre d'exemple, le module d'élasticité à 10% d'allongement du matériau polymérique de remplissage le plus radialement intérieur et en contact avec le noyau tringle peut être égal à 3 fois le module d'élasticité à 10% d'allongement du matériau polymérique de remplissage qui lui est radialement extérieur et adjacent.

Les inventeurs se sont donnés pour objectif d'améliorer l'endurance des bourrelets d'un pneumatique radial pour véhicule lourd de type génie civil, en diminuant la vitesse de propagation des fissures, initiées au niveau de la surface de contact entre un premier matériau polymérique de remplissage le plus radialement intérieur et en contact avec le noyau tringle et un deuxième matériau polymérique de remplissage radialement extérieur au premier matériau polymérique de remplissage.

Cet objectif a été atteint, selon l'invention, par :
- un pneumatique pour véhicule lourd de type génie civil comprenant deux bourrelets destinés à entrer en contact avec une jante, une armature de carcasse comprenant au moins une couche d'armature de carcasse constituée d'éléments de renforcement métalliques,
- la couche d'armature de carcasse comprenant une partie principale d'armature de carcasse s'enroulant dans chaque bourrelet, de l'intérieur vers l'extérieur du pneumatique, autour d'un noyau tringle pour former un retournement d'armature de carcasse,
- chaque bourrelet comprenant un élément de remplissage prolongeant radialement vers l'extérieur le noyau tringle,

- l'élément de remplissage ayant, dans tout plan méridien, une section sensiblement triangulaire et étant formé d'au moins deux matériaux polymériques de remplissage,
- un premier matériau polymérique de remplissage étant le plus radialement intérieur et en contact avec le noyau tringle,
- un deuxième matériau polymérique de remplissage étant radialement extérieur au premier matériau polymérique de remplissage et ayant un module d'élasticité à 10% d'allongement inférieur au module d'élasticité à 10% d'allongement du premier matériau polymérique de remplissage,
- un élément de transition, constitué d'un matériau polymérique de transition, d'épaisseur constante étant en contact, par sa face radialement intérieure, avec le premier matériau polymérique de remplissage et en contact, par sa face radialement extérieure, avec le deuxième matériau polymérique de remplissage
- et le module d'élasticité à 10% d'allongement du matériau polymérique de transition étant intermédiaire entre les modules d'élasticité à 10% d'allongement respectifs des premier et deuxième matériaux polymériques de remplissage.

Selon l'invention, il est avantageux d'avoir un élément de transition, constitué d'un matériau polymérique de transition, d'épaisseur constante, en contact, par sa face radialement intérieure, avec le premier matériau polymérique de remplissage et en contact, par sa face radialement extérieure, avec le deuxième matériau polymérique de remplissage.

Un élément de transition est un élément intercalé entre un premier matériau polymérique de remplissage et un deuxième matériau polymérique de remplissage.

L'élément de transition est constitué le plus souvent d'un seul matériau polymérique de transition. Il peut toutefois être constitué d'un empilement dans le sens radial de matériaux polymériques de transition, dont les modules d'élasticité à 10% d'allongement respectifs sont intermédiaires entre les modules d'élasticité à 10% d'allongement respectifs des premier et deuxième matériaux polymériques de remplissage et décroissent lorsque la distance radiale des matériaux polymériques de transition augmente.

On appelle épaisseur de l'élément de transition, l'épaisseur de l'élément de transition mesurée en dehors des zones de contact respectivement avec la partie principale d'armature de carcasse et le retournement d'armature de carcasse, dans lesquelles l'élément de transition présentent des effilements jusqu'aux extrémités respectivement radialement extérieure et radialement intérieure de l'élément de transition. Dans le cas d'un élément de transition constitués d'un empilement dans le sens radial de matériaux polymériques de transition, l'épaisseur de l'élément de transition est l'épaisseur totale de l'empilement dans le sens radial de matériaux polymériques de transition.

L'élément de transition est dit en contact, par sa face radialement intérieure, avec un premier matériau polymérique de remplissage, lorsque la face radialement intérieure de l'élément de transition est géométriquement confondue avec la face radialement extérieure du premier matériau polymérique de remplissage, sauf dans la partie axialement intérieure de la face radialement intérieure de l'élément de transition en contact avec la partie principale d'armature de carcasse.

L'élément de transition est dit en contact, par sa face radialement extérieure, avec un deuxième matériau polymérique de remplissage, lorsque la face radialement extérieure de l'élément de transition est géométriquement confondue avec la face radialement intérieure du deuxième matériau polymérique de remplissage, sauf dans la partie axialement extérieure de la face radialement extérieure de l'élément de transition en contact avec le retournement d'armature de carcasse.

Le module d'élasticité à 10% d'allongement du matériau polymérique de transition est avantageusement intermédiaire entre les modules d'élasticité à 10% d'allongement respectifs des premier et deuxième matériaux polymériques de remplissage, le deuxième matériau polymérique de remplissage ayant un module d'élasticité à 10% d'allongement inférieur au module d'élasticité à 10% d'allongement du premier matériau polymérique de remplissage. La décroissance progressive des modules d'élasticité à 10% d'allongement quand on passe du premier matériau polymérique de remplissage au matériau polymérique de transition, puis au deuxième matériau polymérique de remplissage permet un gradient décroissant et progressif de rigidités, qui permet de diminuer localement les contraintes et déformations dans la zone de transition entre les premier et deuxième matériaux de remplissage et, par conséquent, de ralentir la propagation des fissures.

Un module d'élasticité à 10% d'allongement du matériau polymérique de transition intermédiaire apporte un avantage d'autant plus significatif que l'écart entre les modules d'élasticité à 10% d'allongement respectifs des premier et deuxième matériaux polymériques de remplissage est important. A titre d'exemple, dans un pneumatique selon l'invention, le module d'élasticité à 10% d'allongement du premier matériau polymérique de bourrage est égal à environ 2.9 fois le module d'élasticité à 10% d'allongement du deuxième matériau polymérique de remplissage.

L'épaisseur de l'élément de transition est avantageusement au moins égale à 0.1 fois la distance entre l'extrémité du retournement d'armature de carcasse et la partie principale d'armature de carcasse.

La distance entre l'extrémité du retournement d'armature de carcasse et la partie principale d'armature de carcasse est la distance mesurée, selon la droite passant par l'extrémité du retournement d'armature de carcasse et perpendiculaire à la partie principale de l'armature de carcasse, entre la génératrice axialement intérieure des éléments de renforcement du retournement d'armature de carcasse et la génératrice axialement extérieure des éléments de renforcement de la partie principale d'armature de carcasse.

Cette épaisseur minimale de l'élément de transition permet d'établir un gradient de rigidités minimum, permettant de diminuer la vitesse de propagation des fissures.

L'épaisseur de l'élément de transition est également avantageusement au plus égale à 0.5 fois la distance entre l'extrémité du retournement d'armature de carcasse et la partie principale d'armature de carcasse.

En effet, la dissipation thermique du matériau polymérique de transition est supérieure à celle du deuxième matériau polymérique de remplissage, du fait de son module d'élasticité à 10% d'allongement plus élevé. Par conséquent, au-delà d'une épaisseur maximale de l'élément de transition, lorsque l'élément de transition se substitue à une partie du deuxième matériau polymérique de remplissage par rapport au pneumatique de référence, le volume de matériau polymérique de transition trop élevé entraîne une élévation de température du bourrelet dommageable à sa durée de vie, d'où la nécessité de limiter l'épaisseur de l'élément de transition à une valeur maximale.

Par ailleurs, les inventeurs ont choisi de limiter l'épaisseur de l'élément de transition pour agir localement sur la fissuration tout en limitant l'impact de l'élément de transition sur la rigidité en flexion du bourrelet. L'objectif de l'élément de transition n'est pas de permettre une variation de la rigidité de flexion du bourrelet, mais d'agir sur la vitesse de propagation des fissures entre les premier et deuxième matériaux polymériques de remplissage. En d'autres termes, la flexion globale du bourrelet sur le rebord de jante est du même niveau, avec ou sans élément de transition.

Il est encore avantageux d'avoir le module d'élasticité à 10% d'allongement du matériau polymérique de transition est au moins égal à 0.9 fois et au plus égal à 1.1 fois la moyenne arithmétique des modules d'élasticité à 10% d'allongement respectifs des premier et deuxième matériaux polymériques de remplissage. Cet intervalle de valeurs pour le module d'élasticité à 10% d'allongement du matériau polymérique de transition garantit un gradient de rigidités minimum, quand on passe successivement du premier matériau polymérique de remplissage, au matériau polymérique de transition puis au deuxième matériau polymérique de remplissage, donc une diminution significative de la vitesse de propagation des fissures.

La face radialement intérieure de l'élément de transition est avantageusement en contact continu avec la partie principale d'armature de carcasse entre un premier point de contact et un dernier point de contact qui est le point radialement le plus extérieur de l'élément de transition. Cette surface de contact continue entre la partie principale d'armature de carcasse et l'élément de transition permet de diminuer la vitesse de propagation de fissures, initiées, dans cette zone de contact, sur la face axialement extérieure de la partie principale d'armature de carcasse, et se propageant axialement vers l'extérieur à travers le deuxième matériau polymérique de remplissage.

Il est également avantageux d'avoir la distance entre le premier point de contact et le dernier point de contact de la face radialement intérieure de l'élément de transition, avec la partie principale d'armature de carcasse, au moins égale à la distance et au plus égale à 3 fois la distance entre l'extrémité du retournement d'armature de carcasse et la partie principale d'armature de carcasse.

Cette distance est la distance entre les deux droites perpendiculaires à la partie principale de carcasse et passant respectivement par les premier et dernier points de contact de la face radialement intérieure de l'élément de transition avec la partie principale d'armature de carcasse.

Cette distance garantit une zone de contact entre l'élément de transition et la partie principale d'armature de carcasse, dans une zone de courbure maximale de la partie principale d'armature de carcasse dont la face axialement extérieure est une zone préférentielle d'initiation de fissures. L'intervalle de valeurs de cette distance, définie en fonction de la distance entre l'extrémité du retournement d'armature de carcasse et la partie principale d'armature de carcasse, garantit la présence de l'élément de transition dans toute la zone potentielle d'initiation de fissures, sur la face axialement extérieure de la partie principale d'armature de carcasse.

Les caractéristiques de l'invention seront mieux comprises à l'aide de la description des figures annexées 1 et 2 :
- la figure 1 présente une vue en coupe dans un plan méridien du bourrelet d'un pneumatique pour véhicule lourd de type génie civil de l'état de la technique.
- la figure 2 présente une vue en coupe dans un plan méridien du bourrelet d'un pneumatique pour véhicule lourd de type génie civil, selon l'invention.

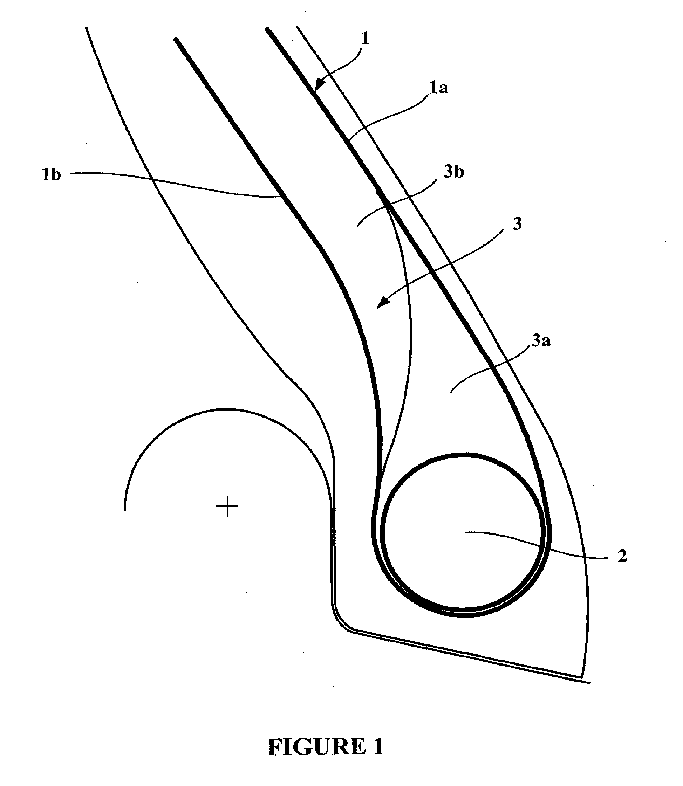

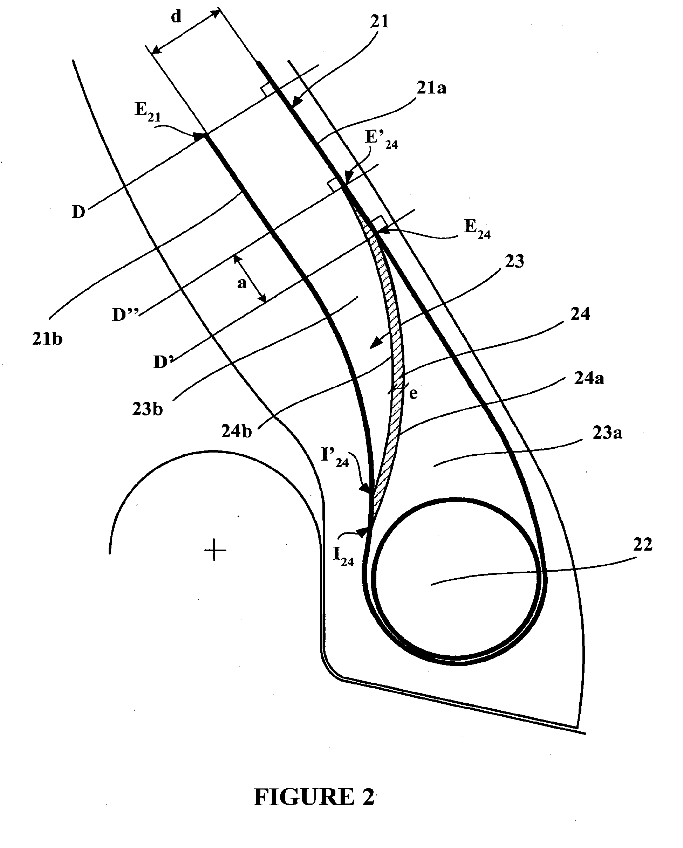

Les figures 1 et 2 ne sont pas représentées à l'échelle pour en faciliter la compréhension.

Sur la figure 1, est représenté un bourrelet de pneumatique pour véhicule lourd de type génie civil de l'état de la technique, comprenant :
- une armature de carcasse comprenant au moins une couche d'armature de carcasse 1 constituée d'éléments de renforcement métalliques,
- la couche d'armature de carcasse comprenant une partie principale d'armature de carcasse la s'enroulant dans chaque bourrelet, de l'intérieur vers l'extérieur du pneumatique, autour d'un noyau tringle 2 pour former un retournement d'armature de carcasse 1b,
- chaque bourrelet comprenant un élément de remplissage 3 prolongeant radialement vers l'extérieur le noyau tringle,
- l'élément de remplissage ayant, dans tout plan méridien, une section sensiblement triangulaire et étant formé de deux matériaux polymériques de remplissage,
- un premier matériau polymérique de remplissage 3a étant le plus radialement intérieur et en contact avec le noyau tringle,
- un deuxième matériau polymérique de remplissage 3b étant radialement extérieur au premier matériau polymérique de remplissage et ayant un module d'élasticité à 10% d'allongement inférieur au module d'élasticité à 10% d'allongement du premier matériau polymérique de remplissage.

La figure 2 présente un bourrelet de pneumatique pour véhicule lourd de type génie civil, selon l'invention, comprenant :
- une armature de carcasse comprenant une couche d'armature de carcasse 21 constituée d'éléments de renforcement métalliques,
- la couche d'armature de carcasse comprenant une partie principale d'armature de carcasse 21a s'enroulant dans chaque bourrelet, de l'intérieur vers l'extérieur du pneumatique, autour d'un noyau tringle 22 pour former un retournement d'armature de carcasse 21b,
- le bourrelet comprenant un élément de remplissage 23 prolongeant radialement vers l'extérieur le noyau tringle,
- l'élément de remplissage ayant, dans tout plan méridien, une section sensiblement triangulaire et étant formé de deux matériaux polymériques de remplissage,
- un premier matériau polymérique de remplissage 23a étant le plus radialement intérieur et en contact avec le noyau tringle,
- un deuxième matériau polymérique de remplissage 23b étant radialement extérieur au premier matériau polymérique de remplissage et ayant un module d'élasticité à 10% d'allongement inférieur au module d'élasticité à 10% d'allongement du premier matériau polymérique de remplissage,
- un élément de transition (24), constitué d'un matériau polymérique de transition, d'épaisseur (e) constante, étant en contact, par sa face radialement intérieure (24a), avec le premier matériau polymérique de remplissage et en contact, par sa face radialement extérieure (24b), avec le deuxième matériau polymérique de remplissage,
- et le module d'élasticité à 10% d'allongement du matériau polymérique de transition étant intermédiaire entre les modules d'élasticité à 10% d'allongement respectifs des premier et deuxième matériaux polymériques de remplissage.

L'élément de transition 24 a une épaisseur e constante, en dehors des zones de contact respectivement avec la partie principale d'armature de carcasse et le retournement d'armature de carcasse, dans lesquelles l'élément de transition présentent des effilements jusqu'aux extrémités respectivement radialement extérieure E'₂₄ et radialement intérieure I₂₄ de l'élément de transition, où se rejoignent les faces radialement intérieure 24a et radialement extérieure 24 b de l'élément de transition 24.

La face radialement intérieure 24a de l'élément de transition 24 est délimitée respectivement par son point radialement le plus intérieur I₂₄ en contact avec le retournement d'armature de carcasse 23b et par son point radialement le plus extérieur E'₂₄ en contact avec partie principale d'armature de carcasse 21a.

La face radialement extérieure 24b de l'élément de transition 24 est délimitée respectivement par son point radialement le plus intérieur I₂₄ en contact avec le retournement d'armature de carcasse 23b et par son point radialement le plus extérieur E'₂₄ en contact avec partie principale d'armature de carcasse 21a.

La zone de contact continu entre l'élément de transition 24 et la partie principale d'armature de carcasse 21a est réalisée le long de la face radialement intérieure 24a de l'élément de transition 24 et est radialement délimitée par le premier point de contact E₂₄, radialement le plus intérieur, et le dernier point de contact E'₂₄, radialement le plus extérieur, qui est également l'extrémité radialement extérieure de l'élément de transition.

La zone de contact continu entre l'élément de transition 24 et le retournement d'armature de carcasse 21b est réalisée le long de la face radialement extérieure 24b de l'élément de transition 24 et est radialement délimitée par le premier point de contact I'₂₄, radialement le plus extérieur, et le dernier point de contact I₂₄, radialement le plus intérieur, qui est également l'extrémité radialement intérieure de l'élément de transition 24.

La distance d entre l'extrémité E₂₁ du retournement d'armature de carcasse 21b et la partie principale d'armature de carcasse 21a est la distance mesurée, selon la droite D passant par l'extrémité E₂₁ du retournement d'armature de carcasse et perpendiculaire à la partie principale de l'armature de carcasse, entre la génératrice axialement intérieure des éléments de renforcement du retournement d'armature de carcasse et la génératrice axialement extérieure des éléments de renforcement de la partie principale d'armature de carcasse.

La distance a entre les premier et dernier points de contact respectifs de la face radialement intérieure 24a de l'élément de transition 24 avec la partie principale d'armature de carcasse 21a est la distance mesurée entre les droites D' et D" perpendiculaires à la partie principale d'armature de carcasse 21a respectivement en E₂₄ et E'₂₄.

L'invention a été plus particulièrement étudiée dans le cas d'un pneumatique pour véhicule lourd de type dumper de dimension 59/80R63. Selon la norme ETRTO, les conditions nominales d'utilisation d'un tel pneumatique sont une pression de gonflage égale à 6 bars, une charge statique égale à 99 tonnes et une distance parcourue en une heure comprise entre 16 et 32 km.

Le pneumatique 59/80R63 a été conçu conformément à l'invention, telle que représentée sur la figure 2.

L'épaisseur e de l'élément de transition 24 est égale à 4.5 mm, soit 0.3 fois la distance d entre l'extrémité E₂₁ du retournement d'armature de carcasse et la partie principale d'armature de carcasse 21a égale à 15 mm.

Les modules d'élasticité à 10% d'allongement du premier matériau polymérique de remplissage, du matériau polymérique de transition et du deuxième matériau polymérique de remplissage sont respectivement égaux à 10 MPa, 6.5 MPa et 3.5 MPa. Par conséquent, le module d'élasticité à 10% d'allongement du matériau polymérique de transition est intermédiaire entre les modules d'élasticité à 10% d'allongement respectifs des premier et deuxième matériaux polymériques de remplissage et est égal à 0.96 fois la moyenne arithmétique modules d'élasticité à 10% d'allongement respectifs des premier et deuxième matériaux polymériques de remplissage.

La distance a entre le premier point de contact E₂₄ et le dernier point de contact E'₂₄ de la face radialement intérieure 24a de l'élément de transition 24, avec la partie principale d'armature de carcasse 21a, est égale à 22.5 mm, soit 1.5 fois la distance d entre l'extrémité E₂₁ du retournement d'armature de carcasse 21b et la partie principale d'armature de carcasse 21a.

Des simulations de calculs par éléments finis ont été réalisées respectivement sur un pneumatique de référence, tel que représenté sur la figure 1, et un pneumatique selon l'invention, tel que représenté sur la figure 2. Pour le pneumatique de référence, l'allongement du deuxième matériau polymérique de remplissage 3b, au voisinage de sa face radialement intérieure, est égal à 2,5 fois l'allongement du premier matériau polymérique de remplissage 3a, au voisinage de sa face radialement extérieure. Pour le pneumatique selon l'invention, l'allongement du matériau polymérique de transition 24, au voisinage de sa face radialement intérieure 24a, est égal à 1.5 fois l'allongement du premier matériau polymérique de remplissage 23a, au voisinage de sa face radialement extérieure. De même, pour le pneumatique selon l'invention, l'allongement du deuxième matériau polymérique de remplissage 23b, au voisinage de sa face radialement intérieure 24a, est égal à 1.5 fois l'allongement du matériau polymérique de transition 24, au voisinage de sa face radialement extérieure.

Par conséquent, la vitesse de propagation d'une fissure du premier matériau polymérique de remplissage 23a vers le matériau polymérique de transition 24, puis du matériau polymérique de transition 24 vers le deuxième matériau polymérique de remplissage 23b, dans le cas de l'invention, est plus faible que la vitesse de propagation d'une fissure du premier matériau polymérique de remplissage 3a vers le deuxième matériau polymérique de remplissage 3b, dans le cas du pneumatique de référence, car le ratio de l'allongement du matériau polymérique de transition 24 par rapport à l'allongement du premier matériau polymérique de remplissage 23a, ainsi que le ratio de l'allongement du deuxième matériau polymérique de remplissage 23b par rapport à l'allongement du matériau polymérique de transition 24, sont inférieurs au ratio de l'allongement du deuxième matériau polymérique de remplissage 3b par rapport à l'allongement du premier matériau polymérique de remplissage 3a.

L'invention ne doit pas être interprétée comme étant limitée à l'exemple illustré sur la figure 2 mais peut être étendue à d'autres variantes de réalisation, par exemple et de manière non exhaustive, relatives au nombre de matériaux polymériques de transition, constituant un empilement dans le sens radial compris entre les premier et deuxième matériaux polymériques de remplissage, ou au nombre de matériaux de remplissage, supérieur à 2, constituant l'élément de remplissage.

## Revendications

1. Pneumatique pour véhicule lourd de type génie civil comprenant deux bourrelets destinés à entrer en contact avec une jante, une armature de carcasse comprenant au moins une couche d'armature de carcasse (1, 21) constituée d'éléments de renforcement métalliques, la couche d'armature de carcasse comprenant une partie principale d'armature de carcasse (1a, 21a) s'enroulant dans chaque bourrelet, de l'intérieur vers l'extérieur du pneumatique, autour d'un noyau tringle (2, 22) pour former un retournement d'armature de carcasse (1b, 21b), chaque bourrelet comprenant un élément de remplissage (3, 23) prolongeant radialement vers l'extérieur le noyau tringle, l'élément de remplissage ayant, dans tout plan méridien, une section sensiblement triangulaire et étant formé d'au moins deux matériaux polymériques de remplissage, un premier matériau polymérique de remplissage (3a, 23a) étant le plus radialement intérieur et en contact avec le noyau tringle, un deuxième matériau polymérique de remplissage (3b, 23b) étant radialement extérieur au premier matériau polymérique de remplissage et ayant un module d'élasticité à 10% d'allongement inférieur au module d'élasticité à 10% d'allongement du premier matériau polymérique de remplissage, **caractérisé en ce qu**'un élément de transition (24), constitué d'un matériau polymérique de transition, d'épaisseur (e) constante en dehors des zones de contact respectivement avec la partie principale d'armature de carcasse (21a) et le retournement d'armature de carcasse (21b), est en contact, par sa face radialement intérieure (24a), avec le premier matériau polymérique de remplissage (23a) et en contact, par sa face radialement extérieure (24b), avec le deuxième matériau polymérique de remplissage (23b) et **en ce que** le module d'élasticité à 10% d'allongement du matériau polymérique de transition est intermédiaire entre les modules d'élasticité à 10% d'allongement respectifs des premier et deuxième matériaux polymériques de remplissage.

2. Pneumatique pour véhicule lourd de type génie civil selon la revendication 1, **caractérisé en ce que** l'épaisseur (e) de l'élément de transition (24) est au moins égale à 0.1 fois la distance (d) entre l'extrémité (E₂₁) du retournement d'armature de carcasse (21b) et la partie principale d'armature de carcasse (21a).

3. Pneumatique pour véhicule lourd de type génie civil selon l'une quelconque des revendications 1 ou 2, **caractérisé en ce que** l'épaisseur (e) de l'élément de transition (24) est au plus égale à 0.5 fois la distance (d) entre l'extrémité (E₂₁) du retournement d'armature de carcasse (21b) et la partie principale d'armature de carcasse (21a).

4. Pneumatique pour véhicule lourd de type génie civil selon l'une quelconque des revendications 1 à 3, **caractérisé en ce que** le module d'élasticité à 10% d'allongement du matériau polymérique de transition (24) est au moins égal à 0.9 fois et au plus égal à 1.1 fois la moyenne arithmétique des modules d'élasticité à 10% d'allongement respectifs des premier et deuxième matériaux polymériques de remplissage (23a, 23b).

5. Pneumatique pour véhicule lourd de type génie civil selon l'une quelconque des revendications 1 à 4, **caractérisé en ce que** la face radialement intérieure (24a) de l'élément de transition (24) est en contact continu avec la partie principale d'armature de carcasse (21a) entre un premier point de contact (E₂₄) et un dernier point de contact (E'₂₄) qui est le point radialement le plus extérieur de l'élément de transition (24).

6. Pneumatique pour véhicule lourd de type génie civil selon l'une quelconque des revendications 1 à 5, **caractérisé en ce que** la distance (a) entre le premier point de contact (E₂₄) et le dernier point de contact (E'₂₄) de la face radialement intérieure (24a) de l'élément de transition (24), avec la partie principale d'armature de carcasse (21a), est au moins égale à la distance (d) entre l'extrémité (E₂₁) du retournement d'armature de carcasse (21b) et la partie principale d'armature de carcasse (21a).

7. Pneumatique pour véhicule lourd de type génie civil selon l'une quelconque des revendications 1 à 6, **caractérisé en ce que** la distance (a) entre le premier point de contact (E₂₄) et le dernier point de contact (E'₂₄) de la face radialement intérieure (24a) de l'élément de transition (24), avec la partie principale d'armature de carcasse (21a), est au plus égale à 3 fois la distance (d) entre l'extrémité (E₂₁) du retournement d'armature de carcasse (21b) et la partie principale d'armature de carcasse (21a).

## Patentansprüche

1. Luftreifen für ein Schwerlastfahrzeug von der Art Baufahrzeug, der zwei Wülste enthält, die dazu bestimmt sind, mit einer Felge in Kontakt zu kommen, wobei eine Karkassenbewehrung mindestens eine aus metallischen Verstärkungselementen bestehende Karkassenbewehrungsschicht (l, 21) enthält, wobei die Karkassenbewehrungsschicht einen Karkassenbewehrungshauptteil (1a, 21a) enthält, der sich in jedem Wulst von der Innenzur Außenseite des Luftreifens um einen Wulstkern (2, 22) wickelt, um einen Karkassenbewehrungsumschlag (1b, 21b) zu formen, wobei jeder Wulst ein Füllelement (3, 23) enthält, das den Wulstkern radial nach außen verlängert, wobei das Füllelement in jeder Meridianebene einen im Wesentlichen dreieckigen Querschnitt hat und von mindestens zwei Füllpolymermaterialien gebildet wird, wobei ein erstes Füllpolymermaterial (3a, 23a) radial am weitesten innen liegt und mit dem Wulstkern in Kontakt ist, ein zweites Füllpolymermaterial (3b, 23b) bezüglich des ersten Füllpolymermaterials radial außen liegt und einen Elastizitätsmodul bei 10% Dehnung niedriger als der Elastizitätsmodul bei 10% Dehnung des ersten Füllpolymermaterials hat, **dadurch gekennzeichnet, dass** ein aus einem Übergangspolymermaterial bestehendes Übergangselement (24) einer konstanten Dicke (e) außerhalb der Kontaktbereiche mit dem Hauptkarkassenbewehrungsteil (21a) bzw. mit dem Karkassenbewehrungsumschlag (21b) über seine radial innere Seite (24a) mit dem ersten Füllpolymermaterial (23a) und über seine radial äußere Seite (24b) mit dem zweiten Füllpolymermaterial (23b) in Kontakt ist, und dass der Elastizitätsmodul bei 10% Dehnung des Übergangspolymermaterials zwischen den jeweiligen Elastizitätsmodulen bei 10% Dehnung des ersten und zweiten Füllpolymermaterials liegt.

2. Luftreifen für ein Schwerlastfahrzeug von der Art Baufahrzeug nach Anspruch 1, **dadurch gekennzeichnet, dass** die Dicke (e) des Übergangselements (24) mindestens gleich dem 0,1-Fachen des Abstands (d) zwischen dem Ende (E₂₁) des Karkassenbewehrungsumschlags (21b) und dem Karkassenbewehrungshauptteil (21a) ist.

3. Luftreifen für ein Schwerlastfahrzeug von der Art Baufahrzeug nach einem der Ansprüche 1 oder 2, **dadurch gekennzeichnet, dass** die Dicke (e) des Übergangselements (24) höchstens gleich dem 0,5-Fachen des Abstands (d) zwischen dem Ende (E₂₁) des Karkassenbewehrungsumschlags (21b) und dem Karkassenbewehrungshauptteil (21a) ist.

4. Luftreifen für ein Schwerlastfahrzeug von der Art Baufahrzeug nach einem der Ansprüche 1 bis 3, **dadurch gekennzeichnet, dass** der Elastizitätsmodul bei 10% Dehnung des Übergangspolymermaterials (24) mindestens gleich dem 0,9-Fachen und höchstens gleich dem 1,1-Fachen des arithmetischen Mittels der jeweiligen Elastizitätsmodule bei 10% Dehnung des ersten und zweiten Füllpolymermaterials (23a, 23b) ist.

5. Luftreifen für ein Schwerlastfahrzeug von der Art Baufahrzeug nach einem der Ansprüche 1 bis 4, **dadurch gekennzeichnet, dass** die radial innere Seite (24a) des Übergangselements (24) zwischen einem ersten Kontaktpunkt (E₂₄) und einem letzten Kontaktpunkt (E'₂₄), der der radial am weitesten außen liegende Punkt des Übergangselements (24) ist, in durchgehendem Kontakt mit dem Karkassenbewehrungshauptteil (21a) ist.

6. Luftreifen für ein Schwerlastfahrzeug von der Art Baufahrzeug nach einem der Ansprüche 1 bis 5, **dadurch gekennzeichnet, dass** der Abstand (a) zwischen dem ersten Kontaktpunkt (E₂₄) und dem letzten Kontaktpunkt (E'₂₄) der radial inneren Seite (24a) des Übergangselements (24) mit dem Karkassenbewehrungshauptteil (21a) mindestens gleich dem Abstand (d) zwischen dem Ende (E₂₁) des Karkassenbewehrungsumschlags (21b) und dem Karkassenbewehrungshauptteil (21a) ist.

7. Luftreifen für ein Schwerlastfahrzeug von der Art Baufahrzeug nach einem der Ansprüche 1 bis 6, **dadurch gekennzeichnet, dass** der Abstand (a) zwischen dem ersten Kontaktpunkt (E₂₄) und dem letzten Kontaktpunkt (E'₂₄) der radial inneren Seite (24a) des Übergangselements (24) mit dem Karkassenbewehrungshauptteil (21a) höchstens gleich dem Dreifachen des Abstands (d) zwischen dem Ende (E₂₁) des Karkassenbewehrungsumschlags (21b) und dem Karkassenbewehrungshauptteil (21a) ist.

## Claims

1. Tyre for a heavy vehicle of the civil engineering type, comprising two beads intended to come into contact with a rim, a carcass reinforcement comprising at least one carcass reinforcement layer (1, 21) made up of metal reinforcing elements, the carcass reinforcement layer comprising a main portion of carcass reinforcement (1a, 21a) which, in each bead, is wound from the inside towards the outside of the tyre, around a bead wire core (2, 22) to form a turned-back portion of carcass reinforcement (1b, 21b), each bead comprising a filler element (3, 23) extending the bead wire core radially outwards, the filler element having, in any meridian plane, a substantially triangular cross section and being formed of at least two filler polymer materials, a first filler polymer material (3a, 23a) being radially innermost and in contact with the bead wire core, a second filler polymer material (3b, 23b) being radially on the outside of the first filler polymer material and having an elastic modulus at 10% elongation that is less than the elastic modulus at 10% elongation of the first filler polymer material, **characterized in that** a transition element (24), made of a transition polymer material, of constant thickness (e), outside of the zones of contact with, respectively, the main portion of carcass reinforcement (21a) and the turned-back portion of carcass reinforcement (21b), is in contact, via its radially internal face (24a), with the first filler polymer material (23a) and in contact, via its radially external face (24b), with the second filler polymer material (23b), and **in that** the elastic modulus at 10% elongation of the transition polymer material is somewhere between the respective elastic moduli at 10% elongation of the first and second filler polymer materials.

2. Tyre for a heavy vehicle of the civil engineering type according to Claim 1, **characterized in that** the thickness (e) of the transition element (24) is at least equal to 0.1 times the distance (d) between the end (E₂₁) of the turned-back portion of carcass reinforcement (21b) and the main portion of carcass reinforcement (21a).

3. Tyre for a heavy vehicle of the civil engineering type according to either one of Claims 1 and 2, **characterized in that** the thickness (e) of the transition element (24) is at most equal to 0.5 times the distance (d) between the end (E₂₁) of the turned-back portion of carcass reinforcement (21b) and the main portion of carcass reinforcement (21a).

4. Tyre for a heavy vehicle of the civil engineering type according to any one of Claims 1 to 3, **characterized in that** the elastic modulus at 10% elongation of the transition polymer material (24) is at least equal to 0.9 times and at most equal to 1.1 times the arithmetic mean of the respective elastic moduli at 10% elongation of the first and second filler polymer materials (23a, 23b).

5. Tyre for a heavy vehicle of the civil engineering type according to any one of Claims 1 to 4, **characterized in that** the radially internal face (24a) of the transition element (24) is in continuous contact with the main portion of carcass reinforcement (21a) between a first point of contact (E₂₄) and a last point of contact (E'₂₄) which is the radially outermost point of the transition element (24).

6. Tyre for a heavy vehicle of the civil engineering type according to any one of Claims 1 to 5, **characterized in that** the distance (a) between the first point of contact (E₂₄) and the last point of contact (E'₂₄) of the radially internal face (24a) of the transition element (24), with the main portion of carcass reinforcement (21a), is at least equal to the distance (d) between the end (E₂₁) of the turned-back portion of carcass reinforcement (21b) and the main portion of carcass reinforcement (21a).

7. Tyre for a heavy vehicle of the civil engineering type according to any one of Claims 1 to 6, **characterized in that** the distance (a) between the first point of contact (E₂₄) and the last point of contact (E'₂₄) of the radially internal face (24a) of the transition element (24), with the main portion of carcass reinforcement (21a), is at most equal to 3 times the distance (d) between the end (E₂₁) of the turned-back portion of carcass reinforcement (21b) and the main portion of carcass reinforcement (21a).
